# EUROPÄISCHE PATENTSCHRIFT

(11) **EP 0 664 626 B1**
(45) Veröffentlichungstag und Bekanntmachung des Hinweises auf die Patenterteilung: **17.05.2000**
(21) Anmeldenummer: 94119015.9
(22) Anmeldetag: 02.12.1994
(51) Int. Cl.: H04L 7/00

(54) **Verfahren zur Datenübertragung**
Data transmission method
Méthode pour la transmission des données

(30) Priorität: 08.12.1993 DE 4341798
(43) Veröffentlichungstag der Anmeldung: 26.07.1995
(73) Patentinhaber: TEMIC Semiconductor GmbH, 74072 Heilbronn (DE)
(72) Erfinder: Ertel, Rainer, D-90513 Zirndorf (DE); Moser, Helmut, D-74078 Heilbronn (DE)
(74) Vertreter: Maute, Hans-Jürgen, Dipl.-Ing.

(56) Entgegenhaltungen:
- EP-A- 0 065 641
- EP-A- 0 262 478
- DE-A- 3 543 976
- DE-A- 3 717 886
- DE-C- 4 014 931
- US-A- 4 866 737

## Beschreibung

Bei den üblichen Verfahren zur Datenübertragung in Digitaltechnik werden mittels einer Datenübertragungsstrecke Informationen (insbesondere Zahlen) in Form von digitalisierten Datenpaketen zwischen einer Sendeeinheit und einer Empfangseinheit übermittelt. Die Datenübertragung kann beispielsweise im Infrarot-Bereich, Radiofrequenz-Bereich oder Ultraschall-Bereich mit den entsprechenden dafür geeigneten Sendeeinheiten, Empfangseinheiten und Übertragungsstrecken erfolgen. Die digitalisierten Datenpakete oder Binärfolgen, die sogenannten Binärworte, werden in Form von Rechteckpulsen übertragen, wobei für jedes vom Sender der Sendeeinheit an den Empfänger der Empfangseinheit übertragene Bit ein Übertragungspuls benötigt wird.
Um den hierdurch bedingten hohen Energiebedarf für die Datenübertragung auf der Senderseite zu reduzieren und zur Verbesserung der Störsicherheit, wird gemäß der DE-C 40 14 931 ein Binär-Gesamtwort in mehrere binäre Teilworte (Zeitabschnitte) unterteilt, wobei die Zahl der Teilworte und die Bitzahl pro Teilwort für eine bestimmte Bitzahl des Gesamtwortes jeweils fest vereinbart vorgegeben ist; jedem Teilwort wird eine von seiner Bitzahl abhängige Zahl von äquidistanten Positionen (äquidistanten Zeitintervallen) zugeordnet, wobei jede Position für eine charakteristische Bitfolge (Zahl) codiert. Bei der Datenübertragung wird vom Sender innerhalb jedes Teilworts ein Übertragungspuls an der für die zu übertragende Bitfolge (Zahl) codierenden Position abgestrahlt (d. h. im entsprechenden Zeitintervall innerhalb des Zeitabschnittes); dieser "Positionspuls" wird vom Empfänger detektiert, und von der Empfangseinheit decodiert, d. h. die Position des Übertragungspulses (das Zeitintervall) ermittelt und die der Position (dem Zeitintervall) entsprechende Bitfolge (Zahl) zurückgewonnen. Die decodierten Bitfolgen der einzelnen Teilworte werden danach zum Binär-Gesamtwort (zur Zahlenfolge) zusammengesetzt.
Da also bereits ein einziger vom Sender abgestrahlter Übertragungspuls - der Positionspuls - für ein Teilwort mit einer Bitfolge aus mehreren Bits (bzw. für eine ganze Zahl) und nicht nur für ein einzelnes Bit codiert, können Binär-Gesamtworte (Zahlenfolgen) mit einer geringen Anzahl an Übertragungspulsen, einem geringen Energiebedarf der Sendeeinheit und einer hohen Störsicherheit übertragen werden. Nachteilig hierbei ist jedoch, daß beim Übertragen des jeweiligen Teilwortes eines Gesamtwortes (der Zahl einer Zahlenfolge) der gesamte dem Teilwort zugeordnete Zeitabschnitt, d. h. die Zeitdauer aller dem Teilwort zugeordneten Zeitintervalle abgewartet werden muß, bis das nächste Teilwort übertragen werden kann (selbst wenn der Positionspuls gleich zu Beginn des Teilworts ausgegeben wird). Insbesondere bei Gesamtworten mit einer Vielzahl von Teilworten (einer langen Zahlenfolge) oder bei langen Teilworten mit einer großen Anzahl an Positionen (lange Zeitabschnitte mit vielen Zeitintervallen) ist der Zeitbedarf für die Datenübertragung recht hoch; außerdem wird bei der Datenübertragung zur Synchronisation von Sendeeinheit und Empfangseinheit aufgrund der Vielzahl an aufeinanderfolgenden Zeitintervallen ein sehr genauer und damit kostspieliger Taktgenerator (beispielsweise ein Quarz) benötigt.
Der Erfindung liegt die Aufgabe zugrunde, ein hiergegenüber modifiziertes Übertragungsprinzip für ein Datenübertragungsverfahren anzugeben, das einen niedrigen Energiebedarf auf der Senderseite, eine hohe Störsicherheit sowie eine hohe Datenübertragungsrate aufweist.
Diese Aufgabe wird erfindungsgemäß durch die Merkmale im Kennzeichen des Patentanspruchs 1 erreicht.
Vorteilhafte Weiterbildungen der Erfindung ergeben sich aus den Unteransprüchen.

Das Binär-Gesamtwort wird zur Datenübertragung in mehrere Teilworte unterteilt, und in jedem Teilwort ein Positionspuls an einer von der zu übertragenden Information abhängigen Position abgestrahlt; jedoch wird bei der Übertragung eines Gesamtwortes aus mehreren Teilworten (beispielsweise einer Zahlenfolge aus mehreren Zahlen) das Ende des jeweiligen Teilwortes (d. h. der gesamte Zeitabschnitt mit allen Zeitintervallen) nicht abgewartet, sondern die Übertragung eines Teilwortes (einer Zahl) bereits mit dem zugehörigen Positionspuls beendet. Der Positionspuls wirkt gleichzeitig auf der Senderseite als Startsignal (Triggersignal) für das nächste zu übertragende Teilwort (die nächste zu übertragende Zahl) und auf der Empfängerseite als Synchronisationssignal zur Synchronisation der Empfangseinheit auf die Sendeeinheit. Nach jedem Positionspuls kann eine Pausenzeit mit beliebiger aber konstanter Länge vorgegeben werden (beispielsweise eine Pausenzeit von jeweils einem Zeitintervall); diese Pausenzeit muß dann sowohl auf der Senderseite als auch auf der Empfängerseite bekannt sein.
Vorteilhafterweise können insbesondere Gesamtworte mit vielen Teilworten (lange Zahlenfolgen) und Teilworte mit einer Vielzahl an Zeitintervallen aufgrund der Verkürzung der Zeitabschnitte mit hoher Übertragungsgeschwindigkeit, wegen des Wegfalls von zusätzlichen Synchronisationspulsen mit geringem Energiebedarf, aufgrund der geringen Anzahl an Übertragungspulsen mit hoher Störsicherheit und wegen der kurzen Zeitdauer, in denen Synchronität vorhanden sein muß, mit einfachen Taktgeneratoren (beispielsweise Resonatoren) übertragen werden.
Die Aufteilung eines Gesamtwortes in die verschiedenen Teilworte, d. h. die Anzahl der Teilworte und deren jeweilige Bitzahl, kann nach Maßgabe der Bitzahl des zu übertragenen Gesamtworts optimiert werden, um einen minimalen Energiebedarf bzw. Übertragungsaufwand zu erhalten. Diese Aufteilung wird beispielsweise durch einen Rechner fest vorgegeben, der auch den zeitlichen Ablauf in der Sendeeinheit und Empfangseinheit sowie die Koordination zwischen Sendeeinheit und Empfangseinheit steuert (insbesondere die Ermittlung der Positionen/Zeitintervalle).
Den Positionspulsen können - abhängig vom jeweiligen Teilwort und/oder von der Position innerhalb des Teilworts - unterschiedliche Charakteristiken zugeordnet werden; der Positionspuls kann als einzelner Impuls oder als Impulsfolge (Puls) realisiert werden. Diese Charakteristik muß auf der Empfangsseite erkannt und verifiziert werden, was zur Erhöhung der Störsicherheit beitragen kann: beispielsweise kann die Impulsbreite/Pulsbreite, und bei Impulsfolgen (Pulsen) die Schwingungsfrequenz oder die Amplitude der Positionspulse in aufeinanderfolgenden Teilworten oder innerhalb des Teilworts in Abhängigkeit der Position gerade/ungerade variiert werden (die unterschiedliche Pulsbreite kann durch eine Variation der Pulsdauer oder durch eine Variation der Zahl der Schwingungsperioden eingestellt werden).
Wegen des geringen Energiebedarfs kann als weiterer Kontrollmechanismus und zur Absicherung der vorher übertragenen Daten ein sich an das letzte Teilwort des Gesamtwortes anschließendes zusätzliches Kontroll-Teilwort übertragen werden. In diesem Kontroll-Teilwort wird beispielsweise der Positionspuls an einer festgelegten Position des Teilworts ausgegeben oder es wird eine Paritäts- oder Summenbildung unter Berücksichtigung der Bitfolgen der Teilworte vorgenommen; dadurch können Übertragungsfehler leicht erkannt werden und die (aus Sicherheitsgründen üblichen) doppelten Übertragungen entfallen.

Die Erfindung soll nachstehend anhand der Figuren 1 bis 3 näher beschrieben werden. Dabei zeigt:
- Figur 1: den schematischen Aufbau eines Datenübertragungssystems,
- Figur 2: das Codierungsprinzip eines n-Bit-Binärwortes und
- Figur 3: das zeitliche Schema der Datenübertragung bei einem 16-Bit-Binär-Gesamtwort.

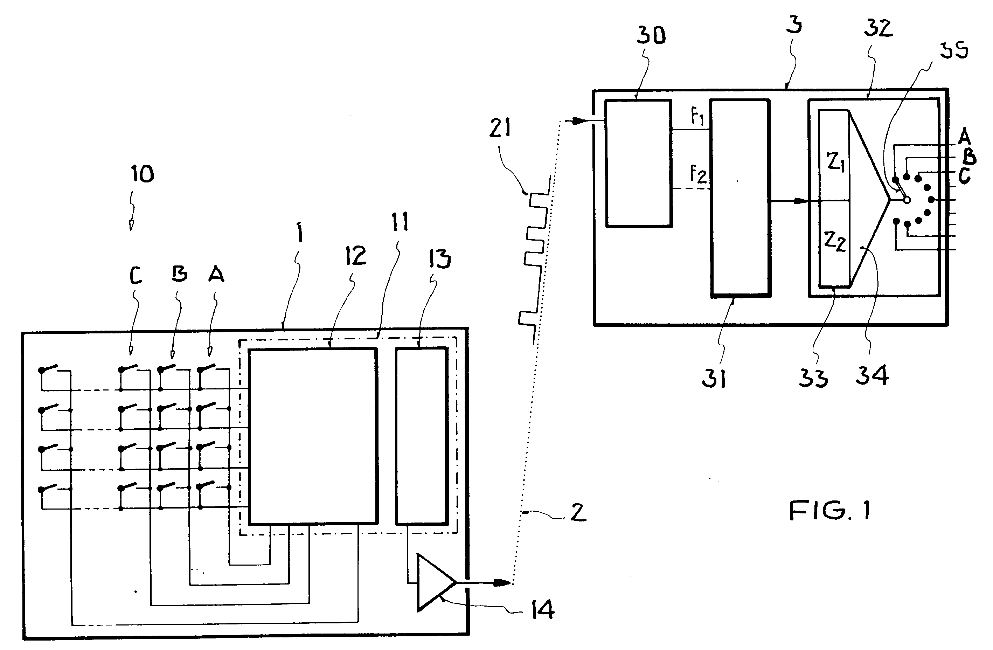

Gemäß der Figur 1 umfaßt das Datenübertragungssystem die Sendeeinheit 1, die Übertragungsstrecke 2 und den Empfänger 3.
Von der Sendeeinheit 1 werden die zu übertragenden Daten vorgegeben, codiert und am Ausgang ausgesandt. Beispielsweise (siehe Figur 1) werden die Daten entsprechend einer gedrückten Taste A, B, C ... der Tastatur 10 vorgegeben und mittels des Sender-Rechners 11 in ein Binär-Gesamtwort umgewandelt (codiert). Der Sender-Rechner 11 besteht beispielsweise aus der Sendeeinrichtung 13 (dem "Sender") und dem Tastatur-Encoder 12; der Tastatur-Encoder 12 als Steuerlogikeinheit dient zur Aufbereitung und zeitlichen Steuerung des Übertragungssignals (beispielsweise zur Unterteilung des Gesamtwortes in die einzelnen Teilworte und zur Bereitstellung der Übertragungspulse bzw. Positionspulse 21 - insbesondere zur Festlegung, in welchem Zeitintervall diese liegen müssen). Der Treiber 14 (beispielsweise ein Leistungsverstärker) sendet die Übertragungspulse 21 auf die Übertragungsstrecke 2 aus.
Auf der Datenübertragungsstrecke 2 werden die Positionspulse 21 beispielsweise im Infrarot-Bereich, im Radiofrequenz-Bereich oder im Ultraschall-Bereich trägerlos oder über Leitungen von der Sendeeinheit 1 zur Empfangseinheit 3 übertragen.
Die Empfangseinheit 3 wertet die bei einer Betätigung der Tastatur 10 (Drücken einer bestimmten Taste A, B, C, ...) übertragene charakteristische Folge von Positionspulsen 21 aus: jeder Positionspuls wird detektiert, decodiert (insbesondere das Zeitintervall der Übertragung ermittelt) und ein für die gedrückte Taste charakteristisches Ausgangssignal abgegeben. Beispielsweise weist die Empfangseinheit 3 folgende Komponenten auf: einen Wandler 30, der die Übertragungspulse 21 in elektrische Signale umwandelt, einen Vorverstärker 31, der beispielsweise zur Selektion von unterschiedlichen Frequenzen f₁, f₂ zwei Eingänge besitzen kann, und einen Empfänger-Rechner 32, der eine Zählereinheit 33 mit den Zeitzählern Z₁ und Z₂ sowie eine Decodiereinrichtung 34 mit dem Schalter 35 umfaßt. Das decodierte Signal wird am Ausgang der Empfangseinheit 3 - beispielsweise als HIGH- oder LOW-Logikpegel - je nach Stellung des Schalters 35 auf einer der Leitungen A, B, C, ... ausgegeben, wobei jeweils eine der Leitungen A, B, C, ... der entsprechenden Taste A, B, C, ... der Tastatur 10 zugeordnet ist.
Bei einem Datenübertragungssystem im IR-Bereich, beispielsweise einem IR-Fernbedienungssystem, werden durch eine IR-Sendeeinheit 1 über den Treiber 14 (beispielsweise als Transistor und IR-Sendediode ausgebildet) mit einer Frequenz von beispielsweise 40 kHz modulierte IR-Übertragungspulse 21 auf die Übertragungsstrecke 2 abgestrahlt. Die modulierten IR-Übertragungspulse 21 werden von der Empfangseinheit 3 detektiert und im Wandler 30 (beispielsweise eine IR-Empfangsdiode) in eine elektrische Spannung bzw. einen elektrischen Strom umgewandelt. Der Vorverstärker 31 enthält einen Integrator, der das modulierte Signal glättet und dem Empfänger-Rechner 32 zuführt; am Ausgang der Empfangseinheit 3 ist beispielsweise ein Schaltmodul angeschlossen, das in Abhängigkeit der gedrückten Taste A, B, C, ... der Tastatur 10 angesteuert wird.

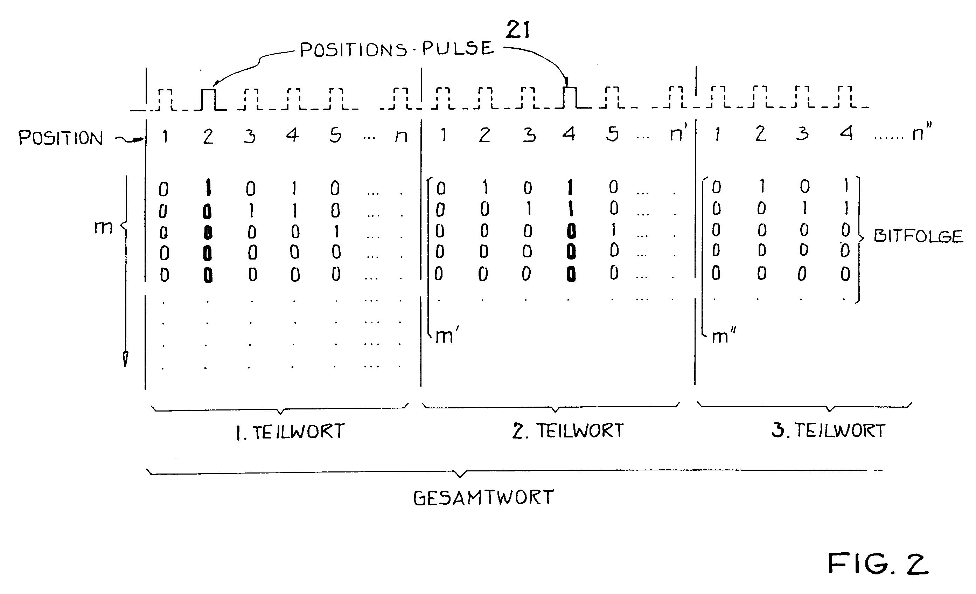

Das zur Datenübertragung verwendete Codierungsprinzip für die Übertragungspulse ist schematisch in der Figur 2 dargestellt.
Das zu übertragende Gesamtwort wird in mehrere Teilworte unterteilt; in der Figur 2 sind drei Teilworte dargestellt, wobei das erste Teilwort m-Bits, das zweite Teilwort m'-Bits und das dritte Teilwort m''-Bits aufweist. Die Zahl der Positionen n (n', n'') innerhalb der Teilworte ist durch die Beziehung n = 2^{m} gegeben; d. h. das erste Teilwort weist 2^{m}, das zweite Teilwort 2^{m'}, das dritte Teilwort 2^{m''} Positionen auf. Verschiedene Teilworte können unterschiedliche Bitzahlen m, m', m'' und damit auch eine unterschiedliche Zahl an Positionen n, n', n'' besitzen. Jede Position innerhalb eines Teilworts codiert für eine bestimmte Bitfolge mit m (m', m'') Bits, so daß jeder Position innerhalb des Teilworts genau eine der mit den Bits m (m', m'') der Teilworte bildbaren Bitkombinationen zugeordnet werden kann. Die Aufteilung des Gesamtwortes in die verschiedenen Teilworte, die Zahl der Bits pro Teilwort und die Zuordnung Position/Bitfolge wird vor der Datenübertragung festgelegt und im Speicher von Sender-Rechner 11 und Empfänger-Rechner 32 abgespeichert. Diese Festlegung kann für eine bestimmte Bitzahl des Gesamtwortes entweder hardwaremäßig durch eine feste Verdrahtung oder softwaremäßig, beispielsweise mittels eines Mikroprozessors, sehr flexibel gewählt werden; in verschiedenen Teilworten können der gleichen Position unterschiedliche Bitfolgen zugeordnet werden.
Innerhalb jedes Teilworts wird dem von der Sendeeinheit 1 an einer bestimmten Position 1 ... n (n', n'') ausgegebenen Positionspuls 21 von der Empfangseinheit 3 die an der jeweiligen Position 1 ... n (n', n'') codierte Bitfolge zugeordnet. Gemäß Figur 2 wird beispielsweise im ersten Teilwort der Positionspuls 21 an der Position n = 2 ausgegeben und die Binär-Bitfolge 10000 ... übertragen, im zweiten Teilwort der Positionspuls 21 an der Position n' = 4 ausgegeben und die Binär-Bitfolge 11000 ... übertragen usw.

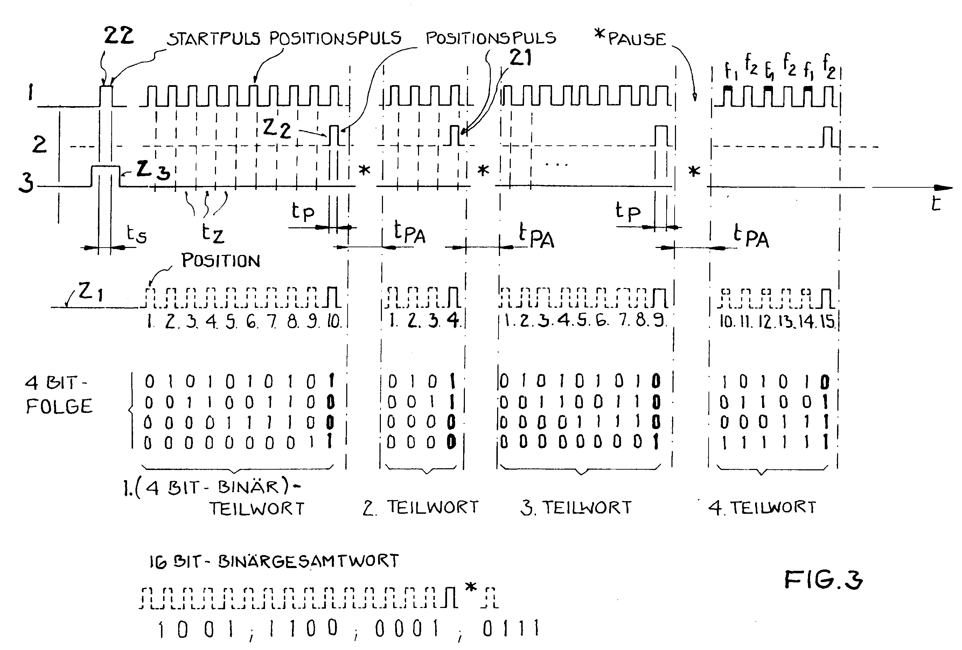

Anhand der Figur 3 wird das Prinzip und der zeitliche Ablauf der Datenübertragung am Beispiel eines 16-Bit-Binär-Gesamtworts erläutert.
Das zu übertragende 16-Bit-Binär-Gesamtwort - die Bitfolge 1001 1100 0001 0111 - wird vor der Übertragung in 4 gleiche Teilworte mit jeweils 4 Bit zerlegt, so daß jedes Teilwort 2⁴ = 16 Positionen 1 bis 16 mit äquidistanten Zeitintervallen t_{Z} aufweist, die jeweils für unterschiedliche 4-Bitfolgen codieren. Je nachdem an welcher Position 1 bis 16 (d. h. in welchem Zeitintervall t_{Z}) der Positionspuls 21 von der Sendeeinheit 1 ausgegeben wird, decodiert die Empfangseinheit 3 eine bestimmte 4-Bitfolge (0000 bis 1111). Falls - wie in der Figur 3 - für alle Teilworte die gleiche Zuordnung Position/Bitfolge gewählt wird, muß für das oben angegebene 16-Bit-Gesamtwort der Positionspuls 21 im 1. Teilwort an der Position 10 (Bitfolge 1001), im 2. Teilwort an der Position 4 (Bitfolge 1100), im 3. Teilwort an der Position 9 (Bitfolge 0001) und im 4. Teilwort an der Position 15 (Bitfolge 0111) übertragen werden.
Der zeitliche Ablauf der Datenübertragung untergliedert sich wie folgt:
- durch die Übertragung des Startpulses 22 wird die Datenübertragung initiiert und - bei mehreren angeschlossenen Empfangseinheiten - die gewünschte Empfangseinheit selektiert
- nach der Übertragung des Startpulses 22 wird der Zeitzähler Z₁ gestartet, der - in Kenntnis der Länge der jeweiligen Teilworte (der Zahl der Positionen) - den zeitlichen Ablauf innerhalb der Teilworte überwacht; durch den Zähler Z₁ wird markiert, bei welcher Position der Positionspuls 21 abgestrahlt wird
- nach jeder Ausgabe eines Positionspulses 21 wird vor der Übertragung des nächsten Teilworts eine Pausenzeit t_{PA} mit definierter Zeitdauer vorgegeben; die (konstante) Pausenzeit t_{PA} kann entsprechend den (äquidistanten) Zeitintervallen t_{Z} der Teilworte gewählt werden - beispielsweise besitzt die Pausenzeit t_{PA} eine Zeitdauer von einem Zeitintervall t_{Z}
- dem ersten Positionspuls wird von der Empfangseinheit das erste 4-Bit-Teilwort 1010, dem zweiten Positionspuls das zweite 4-Bit-Teilwort 1100 zugeordnet usw.
- nachdem das letzte 4-Bit-Teilwort 1100 übertragen und von der Empfangseinheit verifiziert wurde, werden die Bitfolgen der einzelnen Teilworte zum Gesamtwort zusammengesetzt - die einzelnen Teilworte können jedoch auch schon während der Datenübertragung (beispielweise direkt nach ihrer übertragung) aneinandergefügt werden; nach der Decodierung des Gesamtwortes wird ein Ausgangssignal abgegeben
- der zeitliche Zyklus kann nun von vorne beginnen, d. h. die Empfangseinheit ist zum Empfang eines neuen Binär-Gesamtwortes bereit; dieses kann eine Wiederholung von bereits übertragenen Daten sein (beispielsweise bei längerem Drücken einer Taste der Tastatur) oder eine neue Information darstellen (beispielsweise beim Drücken einer anderen Taste der Tastatur). Der Zeitzähler Z₁ wird zu Beginn der Übertragung des neuen Gesamtwortes wieder initialisiert.

Zur Fehlererkennung bei der Datenübertragung sind mehrere Kontrollmechanismen denkbar:
- beispielsweise können geraden/ungeraden Positionen - wie gemäß Figur 3 für das dritte Teilwort dargestellt - oder aufeinanderfolgenden Teilworten unterschiedliche Pulsbreiten zugeordnet werden; dies kann beispielsweise durch eine Variation der Pulsdauer oder bei modulierten Übertragungspulsen durch eine unterschiedliche Zahl an Schwingungsperioden der Modulationsfrequenz erreicht werden. Hierfür wird beispielsweise ein zweiter Zähler Z₂ eingesetzt, der die Pulsbreite tₛ des Startpulses 22 sowie die Pulsbreite tₚ der Positionspulse 21 überwacht; bei fehlerhafter Pulsbreite erfolgt auf der Empfängerseite keine Auswertung des Übertragungssignals.
- anstatt der Pulsbreite tₚ kann auch die Modulationsfrequenz der Positionspulse variiert werden; dies ist beispielhaft in der Figur 3 für die beiden Modulationsfrequenzen f₁ und f₂ im vierten Teilwort dargestellt, hier wird die Frequenz abhängig von der Position gerade/ungerade innerhalb des Teilworts variiert.

Aufgrund dieser Fehlererkennungsmechanismen ist es möglich, neben der Reduzierung des Energiebedarfs eine sehr sichere Datenübertragung zu gewährleisten. Das vorgestellte Datenübertragungsverfahren kann beispielsweise als Infrarot-Fernbedienung in der Fernsehtechnik oder im Automobilsektor für das Öffnen oder Schließen von Türen etc. eingesetzt werden. Denkbar sind auch Übertragungsverfahren im Radiofrequenzbereich oder in anderen Wellenlängenbereichen des elektro-magnetischen Spektrums.

## Patentansprüche

1. Verfahren zur Datenübertragung, bei dem über eine Datenübertragungsstrecke (2) digitalisierte Informationen als Binär-Gesamtworte von einer Sendeeinheit (1) zu einer Empfangseinheit (3) übertragen werden, wobei:
a) ein Binär-Gesamtwort mit vorgegebener Gesamt-Bitzahl in mehrere Teilworte mit variabler Bitzahl und einer von der Bitzahl abhängigen Zahl an Positionen unterteilt wird,
b) den jeweiligen Teilworten alle aus den Bits der Teilworte bildbaren Binär-Bitfolgen zugeordnet werden,
c) die verschiedenen Binär-Bitfolgen an unterschiedlichen Positionen innerhalb eines Teilworts codiert werden,
d) in jedem Teilwort genau eine Binär-Bitfolge von der Sendeeinheit (1) zur Empfangseinheit (3) derart übertragen wird, daß ein Positionspuls (21) an derjenigen Position des Teilworts abgestrahlt wird, an der die zu übertragende Binär-Bitfolge codiert ist,
e) in der Empfangseinheit (3) die der Position des Positionspulses (21) entsprechende Binär-Bitfolge decodiert wird,
f) die in den einzelnen Teilworten übertragenen Binär-Bitfolgen zum Binär-Gesamtwort zusammengesetzt werden,
gekennzeichnet dadurch:
g) die Datenübertragung eines Teilworts wird durch Abstrahlung des Positionspulses (21) beendet,
h) der Positionspuls (21) wirkt als Triggersignal für die Sendeeinheit (1) und initiiert die Datenübertragung des nächsten Teilworts,
i) der Positionspuls (21) wirkt als Synchronisationssignal für die Empfangseinheit (3) und synchronisiert diese auf die Sendeeinheit (1).

2. Verfahren nach Anspruch 1, dadurch gekennzeichnet, daß nach jedem Positionspuls (21) vor der Übertragung des nächsten Teilworts eine Pause mit bestimmter Pausenzeit (t_{PA}) vorgegeben wird, und daß der Positionspuls (21) das Startsignal für die Pausenzeit (t_{PA}) darstellt.

3. Verfahren nach Anspruch 2, dadurch gekennzeichnet, daß die Pausenzeit (t_{PA}) zwischen allen Teilworten eines Binär-Gesamtwortes eine konstante Zeitdauer aufweist.

4. Verfahren nach einem der Ansprüche 1 bis 3, dadurch gekennzeichnet, daß die Unterteilung des Binär-Gesamtwortes in die einzelnen Teilworte sowie die jeweilige Bitzahl der Teilworte vor der Datenübertragung durch einen Rechner (11, 32) festgelegt wird, der auch die zeitliche Koordination zwischen Sendeeinheit (1) und Empfangseinheit (3) steuert.

5. Verfahren nach einem der Ansprüche 1 bis 4, dadurch gekennzeichnet, daß der zeitliche Ablauf der Datenübertragung im Empfänger (3) durch eine im Empfänger-Rechner (32) integrierte Zählereinheit (33) gesteuert wird.

6. Verfahren nach Anspruch 5, dadurch gekennzeichnet, daß die Position der Positionspulse (21) in den einzelnen Teilworten durch einen ersten Zeitzähler (Z₁) der Zählereinheit (33) festgelegt wird.

7. Verfahren nach Anspruch 5 oder 6, dadurch gekennzeichnet, daß die Pulsbreite (tₚ) der Positionspulse (21) durch einen zweiten Zeitzähler (Z₂) der Zählereinheit (33) überwacht werden.

8. Verfahren nach einem der Ansprüche 1 bis 7, dadurch gekennzeichnet, daß beim Start der Datenübertragung zur Selektion der Empfangseinheit (3) vor dem ersten Positionspuls (21) ein Startpuls (22) abgestrahlt wird.

9. Verfahren nach einem der Ansprüche 1 bis 8, dadurch gekennzeichnet, daß zur Datenabsicherung nach dem letzten Teilwort ein zusätzliches Kontroll-Teilwort übertragen wird.

10. Verfahren nach Anspruch 9, dadurch gekennzeichnet, daß die Position des Positionspulses (21) im Kontroll-Teilwort fest vorgegeben wird, so daß dieser von der Empfangseinheit (3) eine fest vorgegebene Binär-Bitfolge zugeordnet wird.

11. Verfahren nach Anspruch 9, dadurch gekennzeichnet, daß die Position des Positionspulses (21) im Kontroll-Teilwort variabel durch Paritätsbildung oder Addition der Teilworte des Binär-Gesamtwortes vorgegeben wird.

12. Verfahren nach Anspruch 8, dadurch gekennzeichnet, daß die Pulsbreite (tₛ) des Startpulses (22) durch den zweiten Zeitzähler (Z₂) überwacht wird, und daß ein Start der Datenübertragung nur dann erfolgt, wenn die Pulsbreite (tₛ) in einem vorgegebenen Intervall liegt.

13. Verfahren nach einem der Ansprüche 1 bis 12, dadurch gekennzeichnet, daß den Positionspulsen (21) in Abhängigkeit der Reihenfolge des Teilworts und/oder der Position innerhalb des Teilworts unterschiedliche Charakteristiken zugeordnet werden.

14. Verfahren nach Anspruch 13, dadurch gekennzeichnet, daß die Positionspulse (21) aufeinanderfolgender Teilworte eine alternierende Charakteristik aufweisen.

15. Verfahren nach Anspruch 13, dadurch gekennzeichnet, daß die Positionspulse (21) aufeinanderfolgender Positionen innerhalb eines Teilwortes eine alternierende Charakteristik aufweisen.

16. Verfahren nach einem der Ansprüche 13 bis 15, dadurch gekennzeichnet, daß die Pulsbreite der Positionspulse (21) variiert wird.

17. Verfahren nach Anspruch 16, dadurch gekennzeichnet, daß zur Variation der Pulsbreite die Pulsdauer (tₚ) der Positionspulse (21) unterschiedlich gewählt wird.

18. Verfahren nach Anspruch 16, dadurch gekennzeichnet, daß zur Variation der Pulsbreite der Positionspulse (21) die Zahl der Schwingungsperioden einer Modulationsfrequenz unterschiedlich gewählt wird.

19. Verfahren nach einem der Ansprüche 13 bis 15, dadurch gekennzeichnet, daß die Frequenz der Positionspulse (21) variiert wird.

20. Verfahren nach Anspruch 19, dadurch gekennzeichnet, daß zwei unterschiedliche Frequenzen (f₁, f₂) gewählt werden.

## Claims

1. Data transmission method, in which digitised information is transmitted as total binary words via a data transmission path (2) from a transmitting unit (1) to a receiving unit (3), wherein:
a) a total binary word with a preset total number of bits is divided into a plurality of part-words with a variable number of bits and a number of positions which depends on the number of bits,
b) all binary bit sequences which can be formed from the bits of the part-words are associated with the respective part-words,
c) the various binary bit sequences are encoded at different positions within a part-word,
d) in each part-word precisely one binary bit sequence is transmitted from the transmitting unit (1) to the receiving unit (3) such that a position pulse (21) is emitted at the position of the part-word at which the binary bit sequence which is to be transmitted is encoded,
e) the binary bit sequence corresponding to the position of the position pulse (21) is decoded in the receiving unit (3),
f) the binary bit sequences transmitted in the individual part-words are combined to form the total binary word, characterised in that:
g) the data transmission of a part-word is terminated by emitting the position pulse (21),
h) the position pulse (21) acts as a trigger signal for the transmitting unit (1) and initiates the data transmission of the next part-word,
i) the position pulse (21) acts as a synchronising signal for the receiving unit (3) and synchronises this with the transmitting unit (1).

2. Method according to Claim 1, characterised in that a pause of a certain pause time (t_{pA}) is preset after each position pulse (21) before transmission of the next part-word, and that the position pulse (21) represents the start signal for the pause time (t_{pA}).

3. Method according to Claim 2, characterised in that the pause time (t_{pA}) between all part-words of a total binary word is of a constant duration.

4. Method according to any one of Claims 1 to 3, characterised in that the division of the total binary word into the individual part-words as well as the respective number of bits of the part-words is determined before data transmission by a computer (11, 32), which also controls the co-ordination in time between the transmitting unit (1) and the receiving unit (3).

5. Method according to any one of Claims 1 to 4, characterised in that the time sequence of the data transmission is controlled in the receiver (3) by a counter unit (33) which is integrated into the receiver-computer (32).

6. Method according to Claim 5, characterised in that the position of the position pulses (21) in the individual part-words is determined by a first time counter (Z₁) of the counter unit (33).

7. Method according to either Claim 5 or 6, characterised in that the pulse width (tₚ) of the position pulses (21) is monitored by a second time counter (Z₂) of the counter unit (33).

8. Method according to any one of Claims 1 to 7, characterised in that a start pulse (22) is emitted when data transmission starts to select the receiving unit (3) before the first position pulse (21).

9. Method according to any one of Claims 1 to 8, characterised in that an additional check part-word is transmitted after the last part-word for data protection purposes.

10. Method according to Claim 9, characterised in that the position of the position pulse (21) in the check part-word is prefixed, so that a prefixed binary bit sequence is associated with this by the receiving unit (3).

11. Method according to Claim 9, characterised in that the position of the position pulse (21) in the check part-word is preset such that it can be varied by forming the parity of or adding the part-words of the total binary word.

12. Method according to Claim 8, characterised in that the pulse width (tₛ) of the start pulse (22) is monitored by the second time counter (Z₂), and that data transmission is only started when the pulse width (tₛ) lies within a preset interval.

13. Method according to any one of Claims 1 to 12, characterised in that different characteristics are associated with the position pulses (21) in accordance with the sequence of the part-word and/or the position within the part-word.

14. Method according to Claim 13, characterised in that the position pulses (21) of consecutive part-words have an alternating characteristic.

15. Method according to Claim 13, characterised in that the position pulses (21) of consecutive positions within a part-word have an alternating characteristic.

16. Method according to any one of Claims 13 to 15, characterised in that the pulse width of the position pulses (21) is varied.

17. Method according to Claim 16, characterised in that the pulse duration (Tₚ) of the position pulses (21) is selected so as to differ by varying the pulse width.

18. Method according to Claim 16, characterised in that the number of periods of oscillation of a modulation frequency is selected so as to differ by varying the pulse width of the position pulses (21).

19. Method according to any one of Claims 13 to 15, characterised in that the frequency of the position pulses (21) is varied.

20. Method according to Claim 19, characterised in that two different frequencies (f₁, f₂) are selected.

## Revendications

1. Procédé de transmission de données, dans lequel des informations numérisées sont transmises par l'intermédiaire d'une section (2) de transmission de données, en tant que mots complets binaires d'une unité d'émission (1) vers une unité de réception (3), selon lequel :
a) un mot complet binaire possédant un nombre total prédéterminé de bits est subdivisé en une pluralité de mots partiels possédant un nombre variable de bits et un nombre de positions, qui dépend du nombre de bits,
b) toutes les suites binaires de bits pouvant être formées à partir des bits des mots partiels sont associées aux mots partiels respectifs,
c) les différentes suites binaires de bits sont codées dans des positions différentes à l'intérieur d'un mot partiel,
d) dans chaque mot partiel de façon précise une suite binaire de bits est transmise par l'unité d'émission (1) et l'unité de réception (3) de telle sorte qu'une impulsion de position (21) est émise dans la position du mot partiel, dans laquelle la suite binaire de bits à transmettre est codée,
e) dans l'unité de réception (3), la suite binaire de bits, qui correspond à la position de l'impulsion de position (21), est décodée,
f) les suites binaires de bits, qui sont transmises dans les mots partiels individuels, sont rassemblées pour former le mot complet binaire,
caractérisé en ce que :
g) la transmission de données d'un mot partiel est terminée par l'émission de l'impulsion de position (21),
h) l'impulsion de position (21) agit en tant que signal de déclenchement pour l'unité d'émission (1) et déclenche la transmission de données du mot partiel immédiatement suivant,
i) l'impulsion de position (21) agit en tant que signal de synchronisation pour l'unité de réception (3) et synchronise cette dernière sur l'unité d'émission (1).

2. Procédé selon la revendication 1, caractérisé en ce qu'après chaque impulsion de position (21) et avant la transmission du mot partiel immédiatement suivant, une pause d'une durée déterminée (t_{PA}) est fixée par avance, et que l'impulsion de position (21) représente le signal de démarrage pour le temps de pause (t_{PA}).

3. Procédé selon la revendication 2, caractérisé en ce que le temps de pause (t_{PA}) entre tous les mots partiels d'un mot complet binaire possède une durée constante.

4. Procédé selon l'une des revendications 1 à 3, caractérisée en ce que la subdivision du mot complet binaire en les différents mots partiels ainsi que le nombre respectifs de bits des mots partiels avant la transmission de données sont fixés par un calculateur (11,32), qui commande également la coordination temporelle entre l'unité d'émission (1) et l'unité de réception (3).

5. Procédé selon l'une des revendications 1 à 4, caractérisé en ce que le déroulement dans le temps de la transmission de données dans le récepteur (3) est commandé par l'unité de comptage (33) intégrée dans le calculateur (32) du récepteur.

6. Procédé selon la revendication 5, caractérisé en ce que l'impulsion de position (21) dans les mots partiels individuels est fixée par un premier compteur horaire (Z₁) de l'unité de comptage (33).

7. Procédé selon la revendication 5 ou 6, caractérisé en ce que les largeurs (tₚ) des impulsions de position (21) sont contrôlées par un second compteur horaire (Z₂) de l'unité de comptage (33).

8. Procédé selon l'une des revendications 1 à 7, caractérisé en ce que lors du démarrage de la transmission de données pour la sélection de l'unité de réception (3), une impulsion de démarrage (22) est émise avant la première impulsion de position (21).

9. Procédé selon l'une des revendications 1 à 8, caractérisé en ce que pour la sécurité des données un mot partiel de contrôle supplémentaire est transmis après le dernier mot partiel.

10. Procédé selon la revendication 9, caractérisé en ce que la position de l'impulsion de position (21) dans le mot partiel de contrôle est prédéterminée de façon fixe de sorte qu'une suite binaire de bits, prédéterminée de façon fixe, est associée à cette position d'impulsion par l'unité de réception (3).

11. Procédé selon la revendication 9, caractérisé en ce que la position de l'impulsion de position (21) dans le mot partiel de contrôle est prédéterminée de façon variable au moyen d'une formation de parité ou au moyen d'une addition des mots partiels du mot complet binaire.

12. Procédé selon la revendication 8, caractérisé en ce que la largeur (tₛ) de l'impulsion de démarrage (22) est contrôlée par le second compteur horaire (Z₂), et qu'un démarrage de la transmission de données s'effectue uniquement lorsque la largeur (tₛ) des impulsions se situe dans un intervalle prédéterminé.

13. Procédé selon l'une des revendications 1 à 12, caractérisé en ce que des caractéristiques différentes sont associées aux impulsions de position (21) en fonction de la séquence du mot partiel et/ou de la position à l'intérieur du mot partiel.

14. Procédé selon la revendication 13, caractérisé en ce que des impulsions de position (21) de mots partiels successifs possèdent des caractéristiques alternées.

15. Procédé selon la revendication 13, caractérisé en ce que les impulsions de position (21) de positions successives à l'intérieur d'un mot partiel possèdent des caractéristiques alternées.

16. Procédé selon l'une des revendications 13 à 15, caractérisé en ce qu'on modifie la largeur des impulsions de position (21).

17. Procédé selon la revendication 16, caractérisé en ce que pour modifier la largeur des impulsions, on choisit une valeur différente pour la durée (tₚ) des impulsions de position (21).

18. Procédé selon la revendication 16, caractérisé en ce que pour modifier la largeur des impulsions de position (21), on choisit une valeur différente pour le nombre des périodes d'oscillation d'une fréquence de modulation.

19. Procédé selon l'une des revendications 13 à 15, caractérisé en ce qu'on modifie la fréquence des impulsions de position (21).

20. Procédé selon la revendication 19, caractérisé en ce qu'on choisit deux fréquences différentes (f₁, f₂).
